(19) Europäisches Patentamt
European Patent Office
Office européen des brevets

(11) **EP 2 798 196 B1**

(12) # EUROPÄISCHE PATENTSCHRIFT

(45) Veröffentlichungstag und Bekanntmachung des Hinweises auf die Patenterteilung:
**26.08.2020 Patentblatt 2020/35**

(21) Anmeldenummer: **12812274.4**

(22) Anmeldetag: **27.12.2012**

(51) Int Cl.:
***F02N 11/08*** *(2006.01)*

(86) Internationale Anmeldenummer:
**PCT/EP2012/076951**

(87) Internationale Veröffentlichungsnummer:
**WO 2013/098324 (04.07.2013 Gazette 2013/27)**

(54) **VERFAHREN ZUM ENTSCHEIDEN ÜBER EINEN EINSPURVORGANG FÜR EINE ANTRIEBSWELLE**

METHOD OF DECIDING ABOUT COUPLING A DRIVING SHAFT

PROCÉDÉ DE PRÉVISION D'UNE VITESSE DE ROTATION D'UN VILEBREQUIN D'UN MOTEUR À COMBUSTION INTERNE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **30.12.2011 DE 102011090151**

(43) Veröffentlichungstag der Anmeldung:
**05.11.2014 Patentblatt 2014/45**

(73) Patentinhaber: **SEG Automotive Germany GmbH**
**70499 Stuttgart (DE)**

(72) Erfinder:
• **CWIK, Matthias**
**70197 Stuttgart (DE)**
• **ROESSLE, Markus**
**70199 Stuttgart (DE)**
• **MAURITZ, Ewald**
**71287 Weissach (DE)**

(74) Vertreter: **Steinbauer, Florian et al**
**Dehns Germany**
**Theresienstraße 6-8**
**80333 München (DE)**

(56) Entgegenhaltungen:
**DE-A1- 10 217 560     DE-A1-102008 041 037**
**DE-A1-102010 001 257     DE-A1-102010 001 762**
**DE-A1-102010 009 648**

## Beschreibung

Stand der Technik

Aus der DE 10 2010 009 648 A1 ist ein Verfahren zur Bestimmung einer Drehzahl einer Antriebswelle einer Brennkraftmaschine bekannt, das es ermöglichen soll, das Einspuren eines Andrehritzels einer Startvorrichtung in den so genannten auslaufenden Verbrennungsmotor zu ermöglichen. Solche Verfahren dienen vor allem dazu, in einem Drehzahlbereich der Antriebswelle der Brennkraftmaschine von oberhalb von 30 Umdrehungen pro Sekunde eine genaue Prognose für den Drehzahlverlauf zu erzeugen. Unterhalb der Drehzahl von 30 Umdrehungen pro Minute kann es passieren, dass die Antriebswelle die Drehrichtung ändert und somit "rückpendelt" (Drehpendel). Durch dieses "Rückpendeln" wechselt die Drehzahl üblicher Weise mehrfach von positiven zu negativen und wiederum zu positiven und evtl. nochmals zu negativen Drehzahlen, um sich früher oder später dem Stillstand anzunähern. Weitere Verfahren zur Prognose der Drehzahl einer Antriebswelle einer Brennkraftmaschine sind aus der DE 10 2010 001 762 A1 und der DE 10 2010 001 257 A1 bekannt.

Es ist vorgesehen, ein Verfahren vorzustellen, mit dem geeignete Zeitpunkte ermittelt werden, um ein Andrehritzel in den Zahnkranz der Brennkraftmaschine während dieses Rückpendelns einzuspuren.

Offenbarung der Erfindung

Das erfindungsgemäße Verfahren mit den Merkmalen des Hauptanspruchs hat den Vorteil, dass zuverlässig ermittelt werden kann, in welchen Kurvenabschnitten günstige Ereignisse für ein sinnvolles Einspuren liegen. Aus diesem Wissen heraus, kann zuverlässig entschieden werden, ob ein Einspuren des Andrehritzels unmittelbar nach Berechnungsende sinnvoll ist oder ist.

Weitere Vorteile ergeben sich aus den Unteransprüchen. So ist beispielsweise vorgesehen, dass das Verfahren erst dann angewendet wird, wenn die Antriebswelle nach einem begonnenen Auslauf der Brennkraftmaschine das erste Mal entgegen einer Antriebsdrehrichtung dreht und damit die Drehzahl der Antriebswelle negativ ist. Dies ist sinnvoll, da es im wesentlichen unmittelbar vor dem ersten Nulldurchgang von einer positiven zu einer negativen Drehzahl zu schwer bis nahezu unberechenbaren kurzen Drehzahlabschnitten kommen kann, die eine zuverlässige Prognose kaum oder nicht ermöglichen. Das berechenbare Ergebnis weicht stark von praktischen Ergebnissen ab. Gemäß einer Ausbildung der Erfindung ist vorgesehen, dass einerseits die Antriebswelle entgegen einer Antriebsdrehrichtung dreht und die Drehzahl zum so genannten späten Zeitpunkt ebenfalls negativ ist und die so genannte theoretische Drehzahl bereits aufgetreten ist. Aus diesen Angaben bzw. Ergebnissen lässt sich ermitteln, dass sich der Drehzahlverlauf zwar in einem negativen Drehzahlast befindet, d. h. die Drehzahl der Antriebswelle ist negativ, aber die Änderung der Drehzahl der Antriebswelle positiv ist.

Kurze Beschreibung der Zeichnungen

Die Erfindung wird anhand mindestens eines Ausführungsbeispiels unter Bezugnahme auf Zeichnungen näher erläutert. Es zeigen:

Figur 1     eine schematische Ansicht einer Anlage, gebildet aus einer Brennkraftmaschine mit einem Zahnkranz, einer Startvorrichtung mit einem Andrehritzel und einem Hubmagneten, einer Steuerungseinheit, einem Startschalter, einer Batterie und einem Sensor,

Figur 2     ein beispielhaftes Drehzahl-/Zeitdiagramm, welches den zeitabhängigen Drehzahlverlauf einer Antriebswelle zeigt.

Ausführungsformen der Erfindung

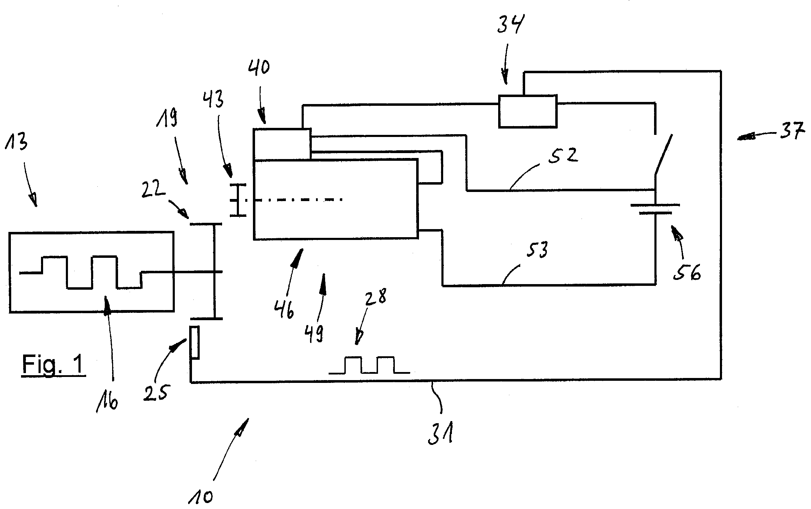

In Figur 1 ist schematisch eine Anlage bzw. Vorrichtung 10 dargestellt, wie sie in einem Kraftfahrzeug schematisch angeordnet sein kann. Diese Vorrichtung 10 weist eine Brennkraftmaschine 13 mit einer Antriebswelle 16 auf, die beispielsweise als Kurbelwelle ausgeführt ist. An einem Ende der Antriebswelle 16 oder in dessen Nähe befindet sich ein Zahnkranz 19, mit dem ein Signalgeberrad 22 mitdreht. Das Signalgeberrad 22 weist signalgebende Elemente auf, deren Bewegung durch einen Sensor 25 erfasst wird. Der Sensor 25 leitet Signale 28 über eine Signalleitung 31 an eine Steuereinrichtung 34. ein Startschalter 37 ist beispielweise mit der Steuereinrichtung 34 verbunden, die beispielsweise beim Schließen des Startschalters 37 ein Signal erhält. Die Steuereinrichtung 34 ist wiederum mit einem Motor 40 verbunden, der hier beispielsweise als Hubmagnet ausgeführt ist. Der hier elektromagnetisch betriebene Hubmagnet wird deswegen als Motor 40 bezeichnet, weil der elektromagnetische Hubmagnet dazu geeignet ist, elektrische Energie in Bewegungsenergie umzuwandeln. Der Hubmagnet ist damit im strengen Sinne eine Vorrichtung, die eine Bewegung erzeugt. Dieser Motor 40 ist bei Erhalt eines bestimmten Signals durch die Steuereinrichtung 34 in der Lage, mittels eines Getriebes, welches hier nicht dargestellt ist und beispielsweise in Form eines Hebelwerks ausgeführt sein kann, ein Andrehritzel 43 in den Zahnkranz 19 einzuspuren. Im Anschluss daran oder gleichzeitig kann durch den Motor 40 ein Antriebsmotor 46 eingeschaltet werden, um das Andrehritzel 43 anzutreiben. Der Motor 40, das Andrehritzel 43 und der Antriebsmotor 46 sind Teile der hier dargestellten Startvorrichtung 49. Ist der Motor 40 als klassisches Einrückrelais ausgebildet, so schaltet dieser Motor 40 mittels einer Kontaktbrücke den Antriebsmotor 46, so dass dieser über eine Zuleitung 52 und einer Masseleitung 53 mit Strom von der Batterie 56 versorgt wird.

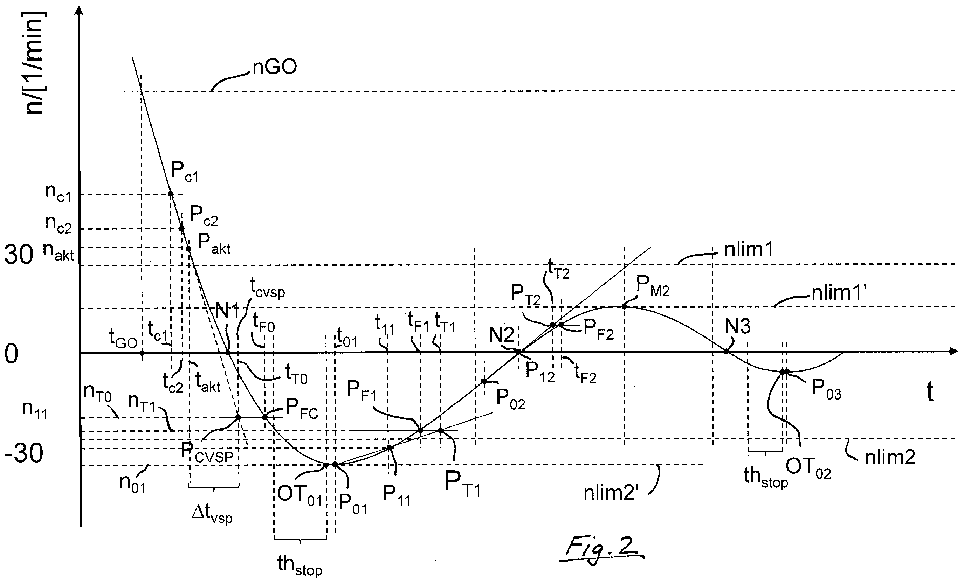

In Figur 2 ist ein Drehzahlverlauf über die Zeit dargestellt. In diesem Diagramm sind zwei verschiedene Situationsbeispiele dargestellt.

Das erste Beispiel für eine Situation befindet sich zeitlich nach dem ersten Nulldurchgang N1 und kurz nach einem ersten Minimum. Dieses Beispiel ist wie alle Beispiele durch vier Punkte bestimmt. Die Punkte P01, P11, PT1 und PF1. Diese Punkte liegen unter einer Drehzahlgrenze nGO, die beispielsweise Anlass für den Beginn des hier vorgestellten Verfahrens ist.

Der Punkt P01 ist durch den Zeitpunkt t01 und die dazugehörige Drehzahl n01, der Punkt P11 durch die zugehörige Zeit t11 und die zugehörige Drehzahl n11 gekennzeichnet. Aus diesen vier Angaben lässt sich in bekannter Weise eine die hier vorliegende Situation vereinfachende Steigung m1 ermitteln. Diese Steigung m1 ergibt sich als die Differenz aus der Drehzahl n11 und n01 dividiert durch die Zeitdifferenz gebildet aus t11 und t01, so dass sich die nachfolgende Gleichung für die Steigung beim ersten Beispiel wie folgt ergibt:

$$(1) \qquad m1 = (n11 - n01) / (t11 - t01)$$

oder allgemein zu

$$(2) \qquad m = (n1 - n0) / (t1 - t0)$$

ergibt.

Diese Steigung m1 wird hier allgemein als Gradient m bezeichnet.

Ausgehend von dem Punkt P11 zur Zeit t11 ergibt sich somit für eine theoretische Drehzahl nT1, auf die hin ausgehend von dem Punkt P11 mit der Steigung m1 prognostiziert wird, eine prognostizierte Zeit tT1.

Es gilt

$$(3) \qquad m1 = (nT1 - n11) / (tT1 - t11) \qquad ,$$

so dass sich für den vorgegebenen Zeitpunkt tT1 eine prognostizierte (theoretische) Drehzahl nT1 zu

$$(4) \qquad nT1 = n11 + m1 * (tT1 - t11)$$

ergibt.

Wird die Drehzahl nT1 vorgegeben, so ergibt sich ein prognostizierter Zeitpunkt tT1 zu

$$(5) \qquad tT1 = t11 + (nT1 - n11) / m1 \qquad .$$

Die Gleichungen (4) und (5) sind ohne Weiteres zu verallgemeinern und auch auf das andere Situationsbeispiel anwendbar.

Für n01 = -38/min, n11 = -33/min, t01 = 44 ms (Millisekunden), t11 = 56 ms ergibt sich nach Gleichung (1) eine Steigung bzw. ein Gradient m1 von

$$m1 = (-33 - (-38)) / ((56 \text{ ms} - 44 \text{ ms}) \text{ min}) = 0,42 / (\text{ms} * \text{min}).$$

Mittels dieses Steigungswerts und der Gleichung (5) für die prognostizierte Zeit tT1 ergibt sich für diese dann mittels der beispielhaft zu erreichenden Zieldrehzahl nT1 = -27/min mit der Gleichung:

$$tT1 = 56ms + (-27/min - (-33/min)) / (0,42 / (ms * min)) = 70ms$$

Faktisch soll in diesem Beispiel jedoch die Zieldrehzahl nF1 = nT1 bereits zum Zeitpunkt tF1 = 62 ms erreicht worden sein. Dies lässt sich beispielsweise durch Messung mittels des bereits erwähnten Sensors 25 bzw. rechnerischer Ermittlung bestimmen.

In diesem Beispiel ergibt sich dann für die Differenz zwischen der prognostizierten Zeit tT1 und der tatsächlichen Zeit tF1 eine Differenz von - 8 ms. D. h., die prognostizierte Drehzahl nT1 trat 8ms früher ein als prognostiziert.

Die Drehzahl n11 ist damit negativ und die prognostizierte Zeit tT1 liegt aus Sicht des Punktes PF1, der die Situation der erreichten prognostizierten Zieldrehzahl nT1 zum tatsächlichen Zeitpunkt tF1 beschreibt, in der Zukunft. Die Brennkraftmaschine befindet sich somit in einem negativen Drehzahllast/Drehzahlbereich und die Drehzahl ist wieder steigend. In dieser allgemeinen Situation ist somit ein Einspuren des Andrehritzels 43 in den Zahnkranz 22 sinnvoll möglich.

Die zweite Situation wird durch die Punkte P02, P12, PT2 und PF2 beschrieben. Für die Größen

Für n02 = -10/min, n12 = 0/min, t02 = 78 ms, t12 = 86 ms ergibt sich nach Gleichung (1) eine Steigung bzw. ein Gradient m2 von

$$m2 = (0 - (-10)) / ((86 ms - 78 ms) min) = 1,25 / (ms * min).$$

Mittels dieses Steigungswerts und der Gleichung (5) für die prognostizierte Zeit tT2 ergibt sich für diese dann mittels der beispielhaft zu erreichenden Zieldrehzahl nT2 = 9/min mit der Gleichung:

$$tT2 = 86ms + (9/min - (0)) / (1,25 / (ms * min)) = 93,2 ms$$

Faktisch soll in diesem Beispiel jedoch die Zieldrehzahl nF2 = nT2 erst zum Zeitpunkt tF2 = 96 ms erreicht worden sein. Dies lässt sich beispielsweise durch Messung mittels des bereits erwähnten Sensors 25 bzw. rechnerischer Ermittlung bestimmen.

In diesem Beispiel ergibt sich dann für die Differenz zwischen der prognostizierten Zeit tT2 und der tatsächlichen Zeit tF2 eine Differenz von 2,8 ms. D. h., die prognostizierte Drehzahl nT2 tritt erst 2,8ms später ein als prognostiziert.

Dieses Verfahren wird beispielhaft unterhalb einer oberen Grenzdrehzahl nGO aktiviert und beispielsweise erst ab dem ersten Nulldurchgang N1 durchgeführt

Für die Situation 2, wonach die Drehzahl n12 Null oder in ähnlichen, leicht später ablaufenden Fällen positiv ist, liegt bei Erreichen der Zieldrehzahl nT2 die prognostizierte Zeit tF2 in der Vergangenheit. Die Brennkraftmaschine befindet sich somit in einem positiven Drehzahlast. Die Drehzahl ist weitersteigend, ein Einspuren ist somit jederzeit sinnvoll möglich.

Würde man für eine Situation nach dem Hochpunkt PM2 und vor dem Nulldurchgang N3 ermitteln so wäre die Drehzahl n0x positiv, die Steigung m negativ und damit würde eine prognostizierte Drehzahl nTx früh erreicht werden bzw. eine prognostizierte Zeit tTx läge in der Zukunft. Ein Einspuren wäre somit auf den Prognosezeitpunkt hin sinnvoll möglich.

Würde man für eine Situation nach dem Nulldurchgang N1 und vor dem Tiefpunkt - hier P01 - ermitteln so wäre die Drehzahl n0x negativ, die Steigung m negativ und damit würde eine prognostizierte Drehzahl nTx spät erreicht werden bzw. eine prognostizierte Zeit tTx läge in der Vergangenheit. Aufgrund der damit weiter fallenden Drehzahl wäre ein Einspuren somit auf den Prognosezeitpunkt hin nicht sinnvoll möglich.

Bevorzugt ist somit in einem Drehzahlbereich einzuspuren, in dem die prognostizierte Drehzahl und auch die Steigung positiv sind.

Weiter bevorzugt ist alternativ in einem Drehzahlbereich einzuspuren, in dem die prognostizierte Drehzahl negativ und die Steigung positiv sind. Damit wird erreicht, dass möglichst früh eingespurt wird.

Ist der Drehzahlbereich positiv und die Steigung negativ, so ist ein Bereich vor N3 - mit einer prognostizierten Drehzahl nTx vor N3 - zu meiden, da zum Einspuren tatsächlich eine negative Drehzahl des Zahnkranzes 19 vorliegen kann.

Im negativen Drehzahlbereich nach P01 (Tiefpunkt) ist dann ein Einspuren sinnvoll, wenn die Prognosezeit erreicht wird.

Das Verfahren wird kontinuierlich durchgeführt und die Prognosen ständig aktualisiert. Es ist dabei ersichtlich, dass bei gleich langen betrachteten Zeiträumen nach P01 eine Zeitdifferenz zwischen einer tatsächlich erreichten Zeit und einer prognostizierten Zeit kürzer werden kann. Ausgehend von einer für eine Startvorrichtung typischen Ausrückzeit ist eine Prognose so lange verwendbar, so lange die aktuelle Zeit nicht näher als eine maximale Ausrückzeit an der Prognosezeit liegt. Zum letztmöglichen Zeitpunkt würde eine Prognose gestartet werden.

Das Verfahren kann auch für Auslaufsituationen verwendet werden, die vor dem ersten Nulldurchgang N1 stattfinden. So wird beispielhaft diese Situation für einen Punkt Pc1 und die Zeit danach angegeben. Mit dem Punkt Pc1 ist eine bestimmte Drehposition der Antriebswelle 16 mit einer bestimmten Drehzahl nc1 zu einem bestimmten Zeitpunkt tc1 verbunden. Mit dem nächsten Punkt Pc2 ist ebenfalls eine bestimmte Drehposition der Antriebswelle 16 mit einer bestimmten Drehzahl nc2 zu einem bestimmten Zeitpunkt tc2 verbunden. In bekannter Weise ergibt sich daraus eine Steigung mc1. Die Berechnung der Steigung mc1 hierfür ist beispielhaft zum Zeitpunkt takt beendet, der nach dem Zeitpunkt tc2 ist. Die Drehzahl nakt ergibt sich über die Steigung mc und den Zeitunterschied zu nc2. Wird dann weiter gerechnet für einen Zeitabschnitt Δtvsp nach takt und mit mc1, so ergibt sich für den linear extrapolierten Zustand im Punkt Pcvsp = PTc eine Drehzahl nvsp zum Zeitpunkt tcvsp. Der Zeitabschnitt Δtvsp entspricht dem Zeitabschnitt, der nötig ist, um ein Ritzel nach dessen erster Aktivierung (Signal "Einrücken") durch ein Steuergerät tatsächlich in Bewegung zu setzen (vorspuren) und in den Zahnkranz einzuspuren. Die Berechnungsweise kann alternativ auch so ablaufen, dass zum Zeitpunkt takt sowohl mc1 berechnet, mit mc1 der Zeitpunkt tcvsp und die prognostizierte Drehzahl ncvsp bekannt ist.

Es wird vorzugsweise eine zweite Drehzahl nlim2 der Antriebswelle (16) vorgegeben, unterhalb derer ein Einspuren eines Antriebsritzels 43 nicht vorgenommen wird.

Befindet sich die ermittelte Drehzahl innerhalb der Grenzen nliml und nlim2 so ist ein Einspuren zulässig, es könnte also sofort ein Einspuren veranlasst werden. Ist die berechnete Drehzahl ncvsp unterhalb von nlim2, so muss ausgehend von einem neuen Punkt eine neue Steigung m ermittelt werden und das Verfahren wie eben beschrieben neu durchgeführt werden.

Der zukünftige Zeitpunkt tT0, tT1, tT2 auf den geschlossen wird, kann direkt oder indirekt von dem späteren Zeitpunkt tc2, t02, t12 aus ermittelt werden. Direkt wäre, wenn der Zeitpunkt ohne die Zeitdifferenz takt - tc2 berechnet würde und mit mc direkt von tc2 auf tcvsp geschlossen würde. Das indirekte Verfahren wurde oben beschrieben.

Im Falle, dass bei der indirekten Ermittlung ausgehend von dem späteren Zeitpunkt tc2, t02, t12 ein fortgeschriebener Zeitpunkt takt verwendet wird, dessen theoretische Drehzahl nakt mit Hilfe des Gradienten (m) ermittelt wird, kann der Vergleich der Eigenschaften von PF1 und PT1, PF2 und PT2 sowie ganz analog von PFc und PTc wie oben beschrieben erfolgen.

Es ist vorgesehen, dass ein Zeitunterschied zwischen dem zukünftigen Zeitpunkt tT0, tT1, tT2 und a) dem späteren Zeitpunkt tc2, t02, t12 oder b) dem fortgeschriebenen Zeitpunkt takt eine erforderliche Vorspurzeit Δtvsp ist.

Es ist somit ein Verfahren zur Prognose einer Drehzahl n einer Antriebswelle 16 einer Brennkraftmaschine 13 vorgesehen, wobei die Drehzahl n der Antriebswelle 16 in einer Vergangenheit ermittelt wird, wobei für die Ermittlung einer theoretischen Drehzahl nT1, nT2 der Antriebswelle 16 in der Zukunft zu einem Zeitpunkt tT1, tT2 die Änderung der Drehzahl n zwischen zwei vergangenen zeitlich auseinander liegenden Ereignissen P01, P11; P02, P12, denen je eine Drehzahl n01, n11; n02, n12 und je ein Zeitpunkt t01, t11; t02, t12 zugeordnet sind, verwendet wird, wobei der Zeitpunkt t01, t02 ein früherer Zeitpunkt ist und der andere ein späterer Zeitpunkt t02, t12 ist, der somit vor dem prognostizierten Zeitpunkt tT1, tT2 liegt, wobei für einen Zeitraum zwischen den beiden Ereignissen P01, P11; P02, P12 ein Gradient m ermittelt wird, durch den auf eine zukünftige theoretische Drehzahl nT1, nT2 zu dem zukünftigen Zeitpunkt tT1, tT2 geschlossen wird, derart, dass zur Bestimmung der theoretischen Drehzahl nT1, nT2 der Antriebswelle 16 zu dem Zeitpunkt tT1, tT2 in der Zukunft der ermittelte Gradient m verwendet wird, um von dem späteren Zeitpunkt t02, t12 ausgehend die theoretische Drehzahl nT1, nT2 zu dem zukünftigen Zeitpunkt tT1, tT2 zu ermitteln, wobei ermittelt wird, ob die theoretische Drehzahl nT1, nT2 tatsächlich vor dem zukünftigen Zeitpunkt tT1, tT2 auftrat oder erst danach.

Es ist vorgesehen, dass dieses angewendet wird, wenn die Antriebswelle 16 nach einem begonnenen Auslauf der Brennkraftmaschine 13 das erste Mal entgegen einer Antriebsdrehrichtung dreht und damit die Drehzahl n der Antriebswelle 16 negativ ist.

Es ist vorgesehen, dass das Verfahren angewendet wird, wenn die Antriebswelle 16 entgegen einer Antriebsdrehrichtung dreht und die Drehzahl n zum späten Zeitpunkt t02, t12 ebenfalls negativ ist und die theoretische Drehzahl nT1, nT2 bereits aufgetreten ist.

Es ist vorgesehen, dass das Verfahren angewendet wird, wenn die Antriebswelle 16 zum späten Zeitpunkt t02, t12 in eine Antriebsdrehrichtung dreht und die theoretische Drehzahl nT1, nT2 zum zukünftigen Zeitpunkt tT1, tT2 nach dem letzten Nulldurchgang N2 noch nicht aufgetreten ist.

Es soll zudem angewendet werden, wenn die Antriebswelle 16 zum späten Zeitpunkt t02, t12 in eine Antriebsdrehrichtung dreht und die theoretische Drehzahl nT1, nT2 bereits vor dem ermittelten zukünftigen Zeitpunkt tT1, tT2 aufgetreten ist.

Das Antriebsritzel 43 soll so angesteuert werden, dass dieses dann in einen Zahnkranz 22 der Brennkraftmaschine 13 einspurt, wenn die Drehzahl n der Antriebswelle 16 wieder zunimmt und/oder positiv ist.

Es soll eine erste Drehzahl nliml der Antriebswelle 16 vorgegeben werden, oberhalb derer ein Einspuren eines Antriebsritzels 43 nicht vorgenommen wird.

Zur möglichst hohen Genauigkeit der Berechnung ist vorgesehen, sämtliche signalgebenden Elemente in bestimmten Drehpositionsbereichen des Signalgeberrads 22 auszuwerten, während außerhalb dieser Drehpositionsbereiche gleitende Mittelwerte von Zuständen mehrerer Drehpositionen ausgewertet werden.

Das Verfahren kann auch dann begonnen werden, wenn die Drehzahl n der Antriebswelle 16 nach dem begonnenen Auslauf der Brennkraftmaschine 13 unter einer Drehzahlgrenze nGO ist, deren Auftreten Anlass für den Beginn des Verfahrens ist, wobei noch kein erster Nulldurchgang N1 stattgefunden hat.

Es ist vorgesehen, dass bis zu einer vorab bestimmten Drehposition thstop der Antriebswelle 16 das Verfahren durchgeführt und dann gestoppt wird und vorzugsweise erst nach dem Durchlaufen eines Drehzahlminimums P01, P03 wieder gestartet wird. Die Drehposition thstop wird durch ein bestimmtes signalgebendes Element am Signalgeberrad 22 charakterisiert, das einer Position einer Kurbelwelle vor dem oberen Totpunkt vorausgeht.

Zusätzlich können optional noch weitere Drehzahlgrenzen vorgegeben werden, um ein Einspuren in einem ungünstigen Drehzahlzustand der Brennkraftmaschine zu verhindern. So ist zum Beispiel eine erhöhte untere Drehzahlgrenze nlim2' (höhere negative Drehzahl) für das Einspurfenster denkbar, die bis zum ersten Minimum der Drehzahl bei P01 im wirksam ist. Hier wechselt die Steigung der Drehzahl von negativ zu positiv. Danach kann die standardmäßig definierte Minimalgrenze nlim2 verwendet werden. Ebenso ist eine veränderte abgesenkte Maximalgrenze nlim1' denkbar, die bis zum ersten Drehzahlmaximum bei PM2 (Steigung wechselt von positiv zu negativ) wirksam ist. Damit wird gewährleistet, dass es auch bei sehr hohen lokalen Drehzahlgradienten nicht zu einem Einspuren in einem ungünstigen Drehzahlbereich kommt. Eine solche erhöhte untere Drehzahlgrenze nlim2' oder eine veränderte abgesenkte Maximalgrenze nlim1' kann beispielsweise auch durch einen Erfahrungswert in Abhängigkeit der Momentansituation der Brennkraftmaschine gesetzt werden.

Die Figur 2 ist allgemein, dient der allgemeinen Anschauung und ist nicht maßstäblich.

**Patentansprüche**

1. Verfahren zum Entscheiden über einen Einspurvorgang eines Andrehritzels eines mit einer Antriebswelle einer auslaufenden Brennkraftmaschine (13) verbundenen Zahnkranzes, umfassend:

   Ermitteln einer ersten Drehzahl (nc1, n01, n11) der Antriebswelle zu einem ersten vergangenen Zeitpunkt (tc1, t01, t11) und einer zweiten Drehzahl (nc2, n02, n12) der Antriebswelle zu einem zweiten vergangenen Zeitpunkt (tc2, t02, t12), der nach dem ersten vergangenen Zeitpunkt liegt;
   Bestimmen eines Gradienten (m1, m2, mc1) aus der ersten Drehzahl (nc1, n01, n11) zu dem ersten vergangenen Zeitpunkt (tc1, t01, t11) und der zweiten Drehzahl (nc2, n02, n12) zu dem zweiten vergangenen Zeitpunkt (tc2, t02, t12);
   Vorhersagen, ausgehend von dem zweiten vergangenen Zeitpunkt (tc2, t02, t12) und dem bestimmten Gradienten (m1, m2, mc1), einer theoretischen zukünftigen Drehzahl (nT0, nT1, nT2) zu einem zukünftigen Zeitpunkt (tT1, tT2, tT2)
   **gekennzeichnet durch**
   Prüfen, ob die tatsächliche Drehzahl der Antriebswelle den Wert der theoretischen Drehzahl (nT0, nT1, nT2) vor oder nach dem zukünftigen Zeitpunkt (tTO, tT1, tT2) erreicht hat; und
   Entscheiden, abhängig von dem Ergebnis des Prüfens, ob ein Einspuren des Andrehritzels in den mit der Antriebswelle verbundenen Zahnkranz sinnvoll ist oder nicht.

2. Verfahren nach Anspruch 1, **dadurch gekennzeichnet, dass** dieses angewendet wird, wenn die Antriebswelle (16) nach einem begonnenen Auslauf der Brennkraftmaschine (13) das erste Mal entgegen einer Antriebsdrehrichtung dreht und damit die Drehzahl (n) der Antriebswelle (16) negativ ist.

3. Verfahren nach Anspruch 2, **dadurch gekennzeichnet, dass** das Verfahren angewendet wird, wenn die Antriebswelle (16) entgegen einer Antriebsdrehrichtung dreht und die Drehzahl (n) zum zweiten Zeitpunkt (t02, t12) ebenfalls negativ ist und die theoretische Drehzahl (nT1, nT2) bereits aufgetreten ist.

4. Verfahren nach Anspruch 2, **dadurch gekennzeichnet, dass** dieses angewendet wird, wenn die Antriebswelle (16) zum zweiten Zeitpunkt (t02, t12) in eine Antriebsdrehrichtung dreht und die theoretische Drehzahl (nT1, nT2) zum zukünftigen Zeitpunkt (tT1, tT2) nach dem letzten Nulldurchgang (N2) noch nicht aufgetreten ist.

5. Verfahren nach Anspruch 2, **dadurch gekennzeichnet, dass** dieses angewendet wird, wenn die Antriebswelle (16) zum zweiten Zeitpunkt (t02, t12) in eine Antriebsdrehrichtung dreht und die theoretische Drehzahl (nT1, nT2) bereits vor dem ermittelten zukünftigen Zeitpunkt (tT1, tT2) aufgetreten ist.

6. Verfahren nach einem der Ansprüche 3, 4 oder 5, **dadurch gekennzeichnet, dass** ein Antriebsritzel (43) so angesteuert wird, dass dieses dann in einen Zahnkranz (22) der Brennkraftmaschine (13) einspurt, wenn die Drehzahl (n) der Antriebswelle (16) wieder zunimmt und/oder positiv ist.

7. Verfahren nach Anspruch 1, **dadurch gekennzeichnet, dass** dieses angewendet wird, wenn die Drehzahl (n) der Antriebswelle (16) nach dem begonnenen Auslauf der Brennkraftmaschine (13) unter einer Drehzahlgrenze (nGO) ist, deren Auftreten Anlass für den Beginn des Verfahrens ist, wobei noch kein erster Nulldurchgang (N1) stattgefunden hat.

8. Verfahren nach einem der vorstehenden Ansprüche, **dadurch gekennzeichnet, dass** der zukünftige Zeitpunkt (tTO, tT1, tT2) auf den geschlossen wird, direkt oder indirekt von dem zweiten Zeitpunkt (tc2, t02, t12) aus ermittelt wird.

9. Verfahren nach Anspruch 8, **dadurch gekennzeichnet, dass** im Falle der indirekten Ermittlung ausgehend von dem zweiten Zeitpunkt (tc2, t02, t12) ein fortgeschriebener Zeitpunkt (takt) verwendet wird, dessen theoretische Drehzahl (nakt) mit Hilfe des Gradienten (m) ermittelt wird.

10. Verfahren nach Anspruch 8 oder 9, **dadurch gekennzeichnet, dass** von dem zweiten Zeitpunkt (tc2, t02, t12) oder dem fortgeschriebenen Zeitpunkt (takt) auf den zukünftigen Zeitpunkt (tTO, tT1, tT2) geschlossen wird.

11. Verfahren nach Anspruch 10, **dadurch gekennzeichnet, dass** ein Zeitunterschied zwischen dem zukünftigen Zeitpunkt (tTO, tT1, tT2) und a) dem zweiten Zeitpunkt (tc2, t02, t12) oder b) dem fortgeschriebenen Zeitpunkt (takt) eine erforderliche Vorspurzeit (Δtvsp) ist.

12. Verfahren nach einem der vorstehenden Ansprüche, **dadurch gekennzeichnet, dass** bis zu einer vorab bestimmten Drehposition (thstop) der Antriebswelle (16) das Verfahren durchgeführt und dann gestoppt wird und vorzugsweise erst nach dem Durchlaufen eines Drehzahlminimums wieder gestartet wird.

13. Verfahren nach einem der vorstehenden Ansprüche, **dadurch gekennzeichnet, dass** eine erste Grenzdrehzahl (nlim1) der Antriebswelle (16) vorgegeben wird, oberhalb derer ein Einspuren eines Antriebsritzels (43) nicht vorgenommen wird.

14. Verfahren nach einem der vorstehenden Ansprüche, **dadurch gekennzeichnet, dass** eine zweite Grenzdrehzahl (nlim2) der Antriebswelle (16) vorgegeben wird, unterhalb derer ein Einspuren eines Antriebsritzels (43) nicht vorgenommen wird.

**Claims**

1. Method for deciding on an engagement operation of a starter pinion of a ring gear connected to a drive shaft of a decelerating internal combustion engine (13), comprising:

   ascertaining a first rotational speed (nc1, n01, n11) of the drive shaft at a first past time (tc1, t01, t11) and a second rotational speed (nc2, n02, n12) of the drive shaft at a second past time (tc2, t02, t12) later than the first past time;
   determining a gradient (m1, m2, mc1) from the first rotational speed (nc1, n01, n11) at the first past time (tc1, t01, t11) and the second rotational speed (nc2, n02, n12) at the second past time (tc2, t02, t12);
   predicting, based on the second past time (tc2, t02, t12) and the determined gradient (m1, m2, mc1), a theoretical future rotational speed (nT0, nT1, nT2) at a future time (tT1, tT2, tT2)
   **characterized by**
   verifying that the actual rotational speed of the drive shaft has reached the value of the theoretical rotational speed (nT0, nT1, nT2) before or after the future time (tTO, tT1, tT2); and
   deciding, depending on the result of the verification, whether engaging the starter pinion in the ring gear connected to the drive shaft is reasonable or not.

2. Method according to claim 1, **characterized in that** said method is applied when the drive shaft (16) rotates for the first time against a driving direction of rotation after a started deceleration of the internal combustion engine (13) and thus the rotational speed (n) of the drive shaft (16) is negative.

3. Method according to claim 2, **characterized in that** the method is applied when the drive shaft (16) rotates against a driving direction of rotation and the rotational speed (n) at the second time (t02, t12) is also negative and the theoretical rotational speed (nT1, nT2) has already occurred.

4. Method according to claim 2, **characterized in that** said method is applied when the drive shaft (16) rotates in a driving direction of rotation at the second time (t02, t12) and the theoretical speed (nT1, nT2) at the future time (tT1, tT2) has not yet occurred after the last zero crossing (N2).

5. Method according to claim 2, **characterized in that** said method is applied when the drive shaft (16) rotates in a driving direction of rotation at the second point in time (t02, t12) and the theoretical rotational speed (nT1, nT2) has already occurred before the ascertained future time (tT1, tT2).

6. Method according to any one of claims 3, 4 or 5, **characterized in that** a starter pinion (43) is actuated in such a way that said drive pinion (43) then engages in a gear rim (22) of the internal combustion engine (13) when the rotational speed (n) of the drive shaft (16) increases again and/or is positive.

7. Method according to claim 1, **characterized in that** said method is applied when the rotational speed (n) of the drive shaft (16) after the internal combustion engine (13) has started to decelerate is below a rotational speed limit (nGO), the occurrence of which is the reason for the start of the method, wherein a first zero crossing (N1) has not yet occurred.

8. Method according to one of the above claims, **characterized in that** the future time (tTO, tT1, tT2) which is ascertained is ascertained directly or indirectly from the second time (tc2, t02, t12).

9. Method according to claim 8, **characterized in that** in the case of indirect ascertainment starting from the second time (tc2, t02, t12) an extrapolated time (takt) is used, the theoretical rotational speed (nakt) of which is ascertained by using the gradient (m).

10. Method according to claim 8 or 9, **characterized in that** from the second time (tc2, t02, t12) or the extrapolated time (takt), a conclusion is drawn on the future time (tTO, tT1, tT2).

11. Method according to claim 10, **characterized in that** a time difference between the future time (tTO, tT1, tT2) and a) the second time (tc2, t02, t12) or b) the extrapolated time (takt) is a required toe-in time (tvsp).

12. Method according to any one of the preceding claims, **characterized in that** up to a predetermined rotational position (thstop) of the drive shaft (16), the method is performed and is then stopped and is preferably only restarted after a rotational speed minimum has been passed.

13. Method according to any one of the preceding claims, **characterized in that** a first limiting rotational speed (nlim1) of the drive shaft (16) is predetermined, above which an engagement of a starter pinion (43) is not performed.

14. Method according to any one of the preceding claims, **characterized in that** a second limiting rotational speed (nlim2) of the drive shaft (16) is predetermined, below which an engagement of a starter pinion (43) is not performed.

**Revendications**

1. Procédé pour décider d'une opération d'engrènement d'un pignon de démarrage d'une couronne dentée reliée à un arbre d'entraînement d'un moteur à combustion interne (13) en roue libre, comportant les étapes consistant à :

déterminer une première vitesse de rotation (nc1, n01, n11) de l'arbre d'entraînement à un premier instant antérieur (tc1, t01, t11) et une seconde vitesse de rotation (nc2, n02, n12) de l'arbre d'entraînement à un second instant antérieur (tc2, t02, t12) qui se situe après le premier instant antérieur,
établir un gradient (m1, m2, mc1) à partir de la première vitesse de rotation (nc1, n01, n11) au premier instant antérieur (tc1, t01, t11) et de la seconde vitesse de rotation (nc2, n02, n12) au second instant antérieur (tc2, t02, t12) ;

prédire, à partir du second instant antérieur (tc2, t02, t12) et du gradient (m1, m2, mc1) établi, une vitesse de rotation théorique ultérieure (nT0, nT1, nT2) à un instant ultérieur (tT1, tT2, tT2)

**caractérisé par** les étapes consistant à :

vérifier si la vitesse de rotation réelle de l'arbre d'entraînement a atteint la valeur de la vitesse de rotation théorique (nT0, nT1, nT2) avant ou après l'instant ultérieur (tTO, tT1, tT2) ; et

décider, en fonction du résultat de la vérification, si un engrènement d'un pignon de démarrage dans la couronne dentée reliée à l'arbre d'entraînement est utile ou non.

2. Procédé selon la revendication 1, **caractérisé en ce que** celui-ci est utilisé lorsque, une fois que le moteur à combustion interne (13) a débuté sa marche en roue libre, l'arbre d'entraînement (16) tourne la première fois à l'opposé du sens d'entraînement en rotation et la vitesse de rotation (n) de l'entraînement (16) est ainsi négative.

3. Procédé selon la revendication 2, **caractérisé en ce que** le procédé est utilisé lorsque l'arbre d'entraînement (16) tourne à l'opposé d'un sens d'entraînement en rotation et que la vitesse de rotation (n) au second instant (t02, t12) est également négative et que la vitesse de rotation théorique (nT1, nT2) est déjà apparue.

4. Procédé selon la revendication 2, **caractérisé en ce que** celui-ci est utilisé lorsque l'arbre d'entraînement (16) au second instant (t02, t12) tourne dans un sens d'entraînement en rotation et que la vitesse de rotation théorique (nT1, nT2) à l'instant ultérieur (tT1, tT2) n'est pas encore apparue après le dernier passage par zéro (N2).

5. Procédé selon la revendication 2, **caractérisé en ce que** celui-ci est utilisé lorsque l'arbre d'entraînement (16) au second instant (t02, t12) tourne dans un sens d'entraînement en rotation et que la vitesse de rotation théorique (nT1, nT2) est déjà apparue avant l'instant ultérieur (tT1, tT2) déterminé.

6. Procédé selon l'une des revendications 3, 4 ou 5, **caractérisé en ce qu'**un pignon de démarrage (43) est commandé de sorte que celui-ci n'engrène dans une couronne dentée (22) du moteur à combustion interne (13) que lorsque la vitesse de rotation (n) de l'arbre d'entraînement (16) augmente de nouveau et/ou est positive.

7. Procédé selon la revendication 1, **caractérisé en ce que** celui-ci est utilisé lorsque, une fois que le moteur à combustion interne (13) a débuté sa marche en roue libre, la vitesse de rotation (n) de l'arbre d'entraînement (16) est inférieure à une limite de vitesse de rotation (nGO) dont l'apparition est la condition de lancement du procédé, aucun premier passage par zéro (N1) n'ayant encore eu lieu.

8. Procédé selon l'une des revendications précédentes, **caractérisé en ce que** l'instant ultérieur (tTO, tT1, tT2) déduit est déterminé directement ou indirectement à partir du second instant (tc2, t02, t12).

9. Procédé selon la revendication 8, **caractérisé en ce que** dans le cas de la détermination indirecte à partir du second instant (tc2, t02, t12), un instant mis à jour (takt) est utilisé dont la vitesse de rotation théorique (nakt) est déterminée à l'aide du gradient (m).

10. Procédé selon la revendication 8 ou 9, **caractérisé en ce que** l'instant ultérieur (tTO, tT1, tT2) est déduit à partir du second instant (tc2, t02, t12) ou de l'instant mis à jour (takt).

11. Procédé selon la revendication 10, **caractérisé en ce qu'**une différence de temps entre l'instant ultérieur (tTO, tT1, tT2) et a) le second instant (tc2, t02, t12) ou b) l'instant mis à jour (takt) est un temps de pré-engrènement (tvsp) requis.

12. Procédé selon l'une des revendications précédentes, **caractérisé en ce que** jusqu'à une position de rotation établie au préalable (thstop) de l'arbre d'entraînement (16), le procédé est mis en œuvre et ensuite arrêté, et est de préférence relancé dès le passage par une vitesse de rotation minimale.

13. Procédé selon l'une des revendications précédentes, **caractérisé en ce qu'**une première limite de vitesse de rotation (nlim1) de l'arbre d'entraînement (16) est prédéfinie, au-dessus de laquelle un engrènement d'un pignon de démarrage (43) n'est pas effectué.

14. Procédé selon l'une des revendications précédentes, **caractérisé en ce qu'**une seconde limite de vitesse de rotation (nlim2) de l'arbre d'entraînement (16) est prédéfinie, au-dessous de laquelle un engrènement d'un pignon de démarrage (43) n'est pas effectué.

Fig. 1

*Fig. 2*

EP 2 798 196 B1

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102010009648 A1
- DE 102010001762 A1
- DE 102010001257 A1